# FASCICULE DE BREVET EUROPEEN

(11) **EP 3 293 341 B1**
(45) Date de publication et mention de la délivrance du brevet: **11.09.2019**
(21) Numéro de dépôt: 17190471.7
(22) Date de dépôt: 11.09.2017
(51) Int. Cl.: B29L 31/00, B29C 65/20, B29C 65/00, E06B 3/96, B29C 65/56

(54) **PROCÉDÉ D'OBTENTION D'UN CADRE DE MENUISERIE ET CADRE DE MENUISERIE À CORDON DE SOUDURE OPTIMISÉ**
HERSTELLUNGSVERFAHREN EINES FENSTER- ODER TÜRRAHMENS, UND FENSTER- ODER TÜRRAHMEN MIT EINER OPTIMIERTEN SCHWEISSNAHT
METHOD FOR OBTAINING A JOINERY FRAME AND JOINERY FRAME WITH OPTIMISED WELD SEAM

(30) Priorité: 12.09.2016 FR 1658464
(43) Date de publication de la demande: 14.03.2018
(73) Titulaire: Moini, Cyrus Bruno Hassan, 01000 Bourg en Bresse (FR)
(72) Inventeur: Moini, Cyrus Bruno Hassan, 01000 Bourg en Bresse (FR)
(74) Mandataire: Weber, Jean-François

(56) Documents cités:
- WO-A1-2014/122572
- DE-A1- 2 923 453

## Description

La présente invention concerne le domaine général de la menuiserie et plus particulièrement des cadres destinés à accueillir ou à constituer des systèmes d'ouverture, tels que des portes ou des fenêtres.

Plus particulièrement, l'invention concerne un procédé d'obtention d'un cadre de menuiserie formant un angle droit entre au moins deux profilés, chacun desdits profilés étant délimité par une bordure intérieure, une bordure extérieure, et au moins un parement, ledit procédé comprenant les étapes suivantes :
- une étape de découpe au cours de laquelle on découpe chacun desdits profilés de biais selon un plan de découpe biaise normal audit parement,
- une étape de forgeage au cours de laquelle on assemble lesdits profilés entre eux pour former un angle droit en mettant en contact lesdits plans de découpe biaise.

L'invention concerne également un cadre de menuiserie qui comprend au moins deux profilés formant un angle droit entre eux, ledit cadre étant délimité par une bordure intérieure, une bordure extérieure, et au moins un parement, lesdits profilés étant chacun découpés et assemblés de biais selon un plan de découpe biaise normal audit parement.

Il est connu, afin de réaliser des cadres de portes ou de fenêtres, que ce soit pour la fabrication des ouvrants ou des dormants, de confectionner lesdits cadres à partir d'un assemblage de plusieurs profilés. En particulier, ces profilés se présentent souvent sous la forme de profilés linéaires creux par exemple de sections sensiblement rectangulaires, ou en forme de Z ou en forme de L, et sont généralement réalisés en PVC.

Afin de fabriquer un tel cadre, il est connu de découper en onglet (c'est-à-dire à 45°) lesdits profilés de manière à pouvoir les assembler à angle droit et ainsi constituer un cadre rectangulaire ou carré qui pourra accueillir une porte, une vitre, une fenêtre, etc. Généralement, l'assemblage des différents profilés est réalisé à l'aide d'une opération de soudage et / ou de forgeage impliquant donc une fusion locale et / ou une déformation plastique de la matière. Plus particulièrement, selon un mode de fabrication bien connu, lesdits profilés découpés en onglet sont positionnés dans une machine comportant différentes cales et autres moyens de bridage, un moyen de chauffage et différents actionneurs. Le cycle connu de fonctionnement d'une telle machine est alors le suivant : les profilés sont maintenus en position selon un assemblage en onglet, puis l'extrémité découpée en onglet desdits profilés est chauffée, puis lesdits profilés sont déplacés l'un vers l'autre de manière à réaliser un forgeage. Une fusion locale entre les deux extrémités découpées en onglet des deux profilés est alors réalisée ce qui confère, après refroidissement un assemblage résistant et indémontable. Ces opérations sont répétées (séquentiellement ou simultanément) autant de fois que nécessaire pour former un cadre fermé.

Le document DE2923453 décrit un procédé selon le préambule de la revendication 1.

Bien que cette technique de fabrication connue donne globalement satisfaction, il n'en demeure pas moins certains problèmes spécifiques. Tout d'abord, ladite opération de soudage et / ou de forgeage sur les profilés découpés en onglet entraîne nécessairement la formation d'un cordon de soudure qui déborde tout autour du plan de joint formé par l'assemblage des profilés. Ce débordement du cordon de soudure est particulièrement pénalisant sur les parements du cadre ainsi que sur son côté extérieur dans la mesure où ces différentes surfaces sont particulièrement visibles lorsque le cadre est installé dans le bâtiment afin de constituer une ouverture, telle qu'une porte ou une fenêtre. Afin de limiter cette dégradation esthétique il est alors connu d'effectuer une opération d'ébavurage afin d'éliminer ce surplus de matière. Cette opération nécessite alors un outillage spécifique comme par exemple une ébavureuse automatique, qui est une machine particulièrement onéreuse, ou à défaut doit être mise en oeuvre manuellement par un opérateur. Il en résulte donc soit des investissements importants (achat d'une ébavureuse automatique) soit une perte de productivité dans le procédé de fabrication du cadre (un opérateur doit réaliser l'ébavurage), ce qui dans les deux cas majore le coût de fabrication.

Cette dégradation de l'esthétique est particulièrement gênante pour les profilés en PVC dont l'apparence vise à imiter un autre matériau, comme du bois par exemple, ou dont l'apparence présente une couleur texturée, et qui sont de plus en plus répandus. En effet, seule la surface de ces profilés est généralement décorée, si bien que lors de la formation du cordon de soudure, de la matière brute, c'est-à-dire de la matière non décorée issue de la fusion des extrémités des profilés vient déborder sur de la matière décorée. L'esthétique du profilé est alors particulièrement dégradée, et même une opération d'ébavurage ne parvient pas à redonner au profilé, une fois transformé sous forme de cadre, une apparence visuelle pleinement satisfaisante.

Afin de limiter les opérations d'ébavurage, il est également connu d'utiliser des cales de soudage qui sont disposées de part et d'autre du profilé afin de limiter, ou du moins contrôler, la formation du cordon de soudure. Mais l'utilisation de ces cales, bien qu'elles permettent d'améliorer sensiblement l'esthétique du cadre, nécessitent à leur tour de nombreuses manipulations de la part des opérateurs (sélections, mises en places, ajustements, enlèvements, etc.) étant entendu que pour obtenir un résultat optimal, il est nécessaire d'utiliser des cales spécifiquement adaptées aux profilés en cours d'utilisation. En d'autres termes, il est nécessaire pour le fabriquant qui a choisi d'utiliser des cales de soudage, de posséder une pluralité de cales différentes, chacune d'entre elle étant dédiée à un profilé spécifique (forme, épaisseur, présence de joint, de rainure d'évacuation, etc.). Il en résulte alors des contraintes budgétaires, d'encombrement et de compétences particulières.

Enfin, ce cordon de soudure qui s'étend surtout le pourtour des profilés représente une perte de matière non négligeable dans la mesure où la taille dudit cordon avoisine généralement plusieurs millimètres de diamètre. Aussi, outre le gaspillage de matière, il est nécessaire de prendre en compte l'existence de ce cordon de soudure lors du calcul des longueurs des profilés avant la fabrication des cadres. En effet, il est alors nécessaire, avec les procédés actuellement connu, de couper les profilés à une longueur supérieure à la longueur finale souhaitée afin de tenir compte de cette perte de matière liée à la formation du cordon de soudure. Cette prise en compte de la perte de matière impose alors des calculs spécifiques et une expérience particulière, nécessitant ainsi du personnel qualifié.

Les objets assignés à la présente invention visent en conséquence à remédier aux différents inconvénients énumérés précédemment et à proposer un nouveau procédé d'obtention d'un cadre de menuiserie présentant un angle droit entre au moins deux profilés qui soit particulièrement simple et rapide à mettre en oeuvre.

Un autre objet de l'invention vise à proposer un nouveau procédé d'obtention d'un cadre de menuiserie qui soit universel et compatible avec différentes formes et différentes dimensions de profilés.

Un autre objet de l'invention vise à proposer un nouveau procédé d'obtention d'un cadre de menuiserie qui soit particulièrement fiable.

Un autre objet de l'invention vise à proposer un nouveau procédé d'obtention d'un cadre de menuiserie qui minimise tout risque d'erreur de la part des opérateurs.

Un autre objet de l'invention vise à proposer un nouveau procédé d'obtention d'un cadre de menuiserie qui minimise le gaspillage de matière.

Un autre objet de l'invention vise à proposer un nouveau procédé d'obtention d'un cadre de menuiserie qui soit particulièrement facile à automatiser.

Un autre objet de l'invention vise à proposer un nouveau procédé d'obtention d'un cadre de menuiserie qui soit compatible avec l'utilisation de profilés décorés en surface imitant l'aspect d'un autre matériau, comme du bois par exemple, ou présentant une couleur texturée.

Un autre objet de l'invention vise à proposer un nouveau procédé d'obtention d'un cadre de menuiserie qui soit compatible avec l'utilisation de profilés en PVC.

Un autre objet de l'invention vise à proposer un nouveau procédé d'obtention d'un cadre de menuiserie qui permette de simplifier le processus de fabrication d'un cadre de menuiserie.

Un autre objet de l'invention vise à proposer un nouveau procédé d'obtention d'un cadre de menuiserie qui permette de diminuer la surface de l'atelier et / ou de limiter l'investissement en machine et / ou outillage.

Un autre objet de l'invention vise à proposer un nouveau cadre de menuiserie formant un angle droit entre au moins deux profilés qui soit particulièrement esthétique.

Un autre objet de l'invention vise à proposer un nouveau cadre de menuiserie qui soit compatible avec différentes ouvertures (portes, fenêtres, etc.).

Un autre objet de l'invention vise à proposer un nouveau cadre de menuiserie qui soit particulièrement facile et rapide à fabriquer tout en étant bon marché.

Un autre objet de l'invention vise à proposer un nouveau cadre de menuiserie qui soit fabricable au moins en partie par les opérateurs et les machines actuellement disponibles sur le marché.

Les objets assignés à l'invention sont atteints à l'aide d'un procédé d'obtention d'un cadre de menuiserie formant un angle droit entre au moins deux profilés, chacun desdits profilés étant délimité par une bordure intérieure, une bordure extérieure, et au moins un parement, ledit procédé comprenant les étapes suivantes :
- une étape de découpe au cours de laquelle on découpe chacun desdits profilés de biais selon un plan de découpe biaise normal audit parement,
- une étape de forgeage au cours de laquelle on assemble lesdits profilés entre eux pour former un angle droit en mettant en contact lesdits plans de découpe biaise,
ledit procédé étant caractérisé en ce que lors de ladite étape de découpe, on découpe lesdits profilés de biais selon un angle de découpe biaise entre ladite bordure extérieure et ledit plan de découpe biaise qui est strictement supérieur à 45° et en ce que lors de ladite étape de forgeage, on déforme au moins localement lesdits plans de découpe biaise de manière à former un cordon de soudure dont la taille est décroissante depuis ladite bordure intérieure vers ladite bordure extérieure.

Les objets assignés à l'invention sont également atteints à l'aide d'un cadre de menuiserie qui comprend au moins deux profilés formant un angle droit entre eux, ledit cadre étant délimité par une bordure intérieure, une bordure extérieure, et au moins un parement, lesdits profilés étant chacun découpés et assemblés de biais selon un plan de découpe biaise normal audit parement, caractérisé en ce qu'il comprend un cordon de soudure qui s'étend à l'interface entre lesdits profilés et dont la taille est décroissante depuis ladite bordure intérieure vers ladite bordure extérieure.

D'autres particularités et avantages de l'invention apparaîtront et ressortiront plus en détails à la lecture de la description faite ci-après, en référence aux dessins annexés, donnés uniquement à titre d'exemple illustratif et non limitatif, dans lesquels :
- La figure 1 illustre, selon une vue schématique de dessus, une étape de chauffage de deux profilés qui fait partie d'un procédé d'obtention d'un cadre de menuiserie conforme à un premier mode de réalisation de l'invention.
- La figure 2 illustre, selon une vue schématique de dessus, une étape de forgeage, qui fait suite à l'étape de chauffage de la figure 1, ladite étape de forgeage faisant partie dudit procédé de la figure 1.
- La figure 3 illustre, selon une vue schématique agrandie de dessus, le cadre obtenu selon le procédé conforme au premier mode de réalisation de l'invention, à l'issue des étapes de chauffage et de forgeage des figures 1 et 2.
- La figure 4 illustre, selon une vue schématique en perspective, une étape alternative de forgeage qui fait partie d'un procédé d'obtention d'un cadre de menuiserie conforme à un deuxième mode de réalisation de l'invention.
- La figure 5 illustre, selon une vue schématique en perspective, le cadre obtenu grâce au procédé selon le deuxième mode de réalisation de l'invention de la figure 4.
- La figure 6 est une vue schématique agrandie de dessus de l'étape de forgeage de la figure 4.
- La figure 7 est une vue schématique agrandie de dessus du cadre de la figure 5.
- La figure 8 est une vue schématique d'ensemble de dessus d'une étape de chauffage de quatre profilés qui fait partie d'un procédé conforme à l'invention selon l'un ou l'autre des modes de réalisation.
- La figure 9 est une vue d'ensemble de dessus de la fin de l'étape de forgeage qui fait suite à l'étape de chauffage de la figure 8 et du cadre obtenu, ladite étape de forgeage faisant partie du procédé de la figure 8.
- La figure 10 illustre, selon une vue schématique de dessus, un exemple d'implantation de différentes machines nécessaires à la mise en oeuvre du procédé conforme à l'invention selon l'un ou l'autre des modes de réalisation.
- La figure 11 est une représentation sous forme de logigramme d'un procédé d'obtention d'un cadre de menuiserie conforme au deuxième mode de réalisation de l'invention.
- La figure 12 illustre, selon une vue en perspective, une étape de forgeage qui fait partie d'un procédé d'obtention d'un cadre de menuiserie dont la section est en forme de Z, ledit cadre étant conforme au deuxième mode de réalisation de la figure 4.

L'invention concerne en tant que tel un procédé d'obtention d'un cadre de menuiserie 1, c'est-à-dire un procédé permettant par exemple de fabriquer, assembler et / ou construire un cadre de menuiserie 1. Préférentiellement, ledit cadre de menuiserie 1 est destiné à accueillir ou à former une ouverture, telle qu'une porte, une fenêtre, une porte-fenêtre ou encore toute autre ouverture, comme par exemple une fenêtre de toit. En d'autres termes, ledit cadre de menuiserie 1 désigne indifféremment un cadre 1 destiné à former un ouvrant, c'est-à-dire la partie mobile d'une ouverture qui comporte généralement une vitre, ou un dormant, c'est-à-dire la partie fixe d'une ouverture qui est généralement fixée à la maçonnerie (au mur par exemple).

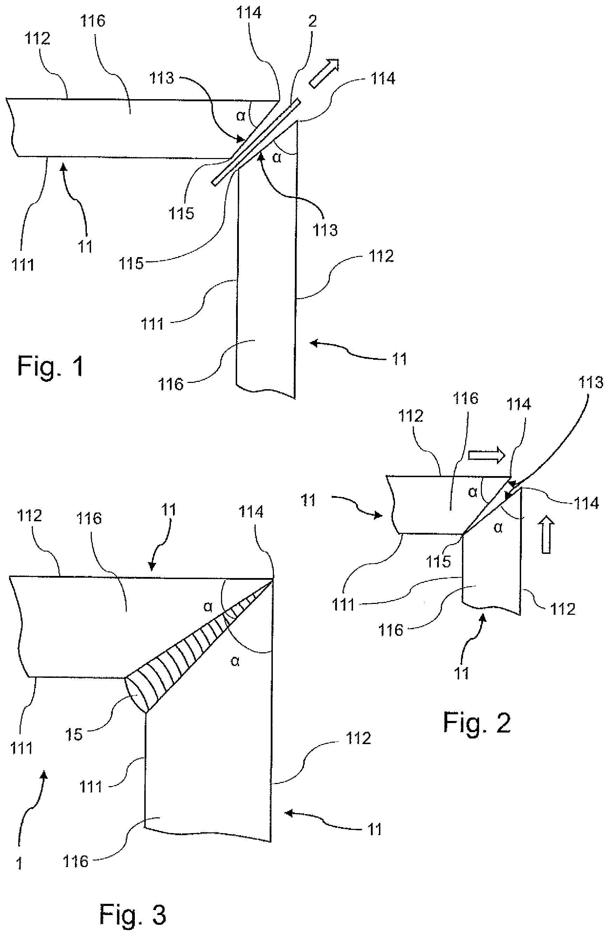

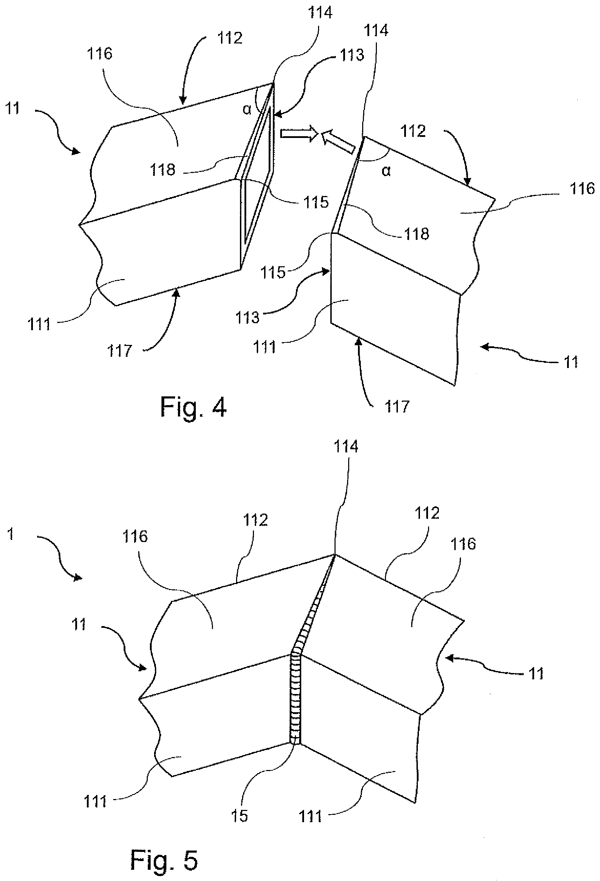

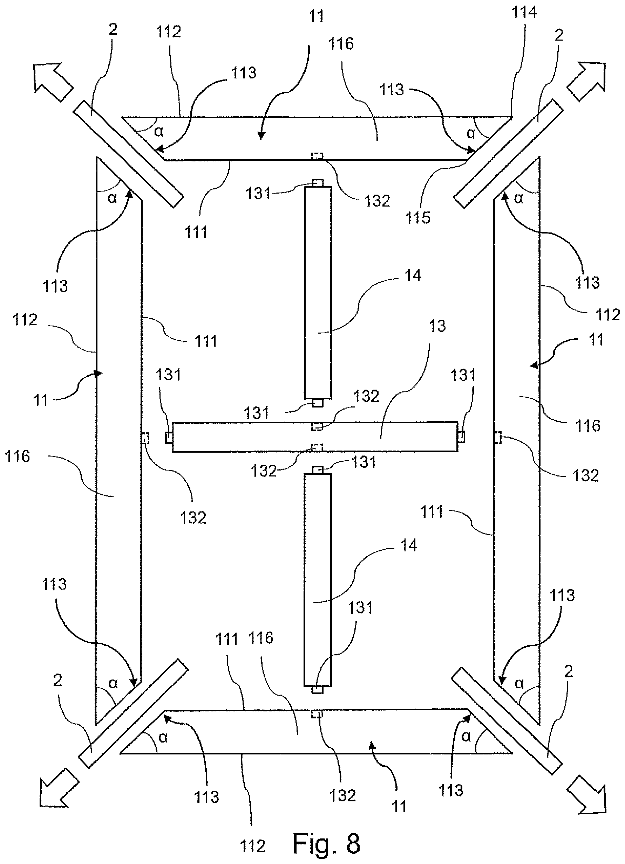

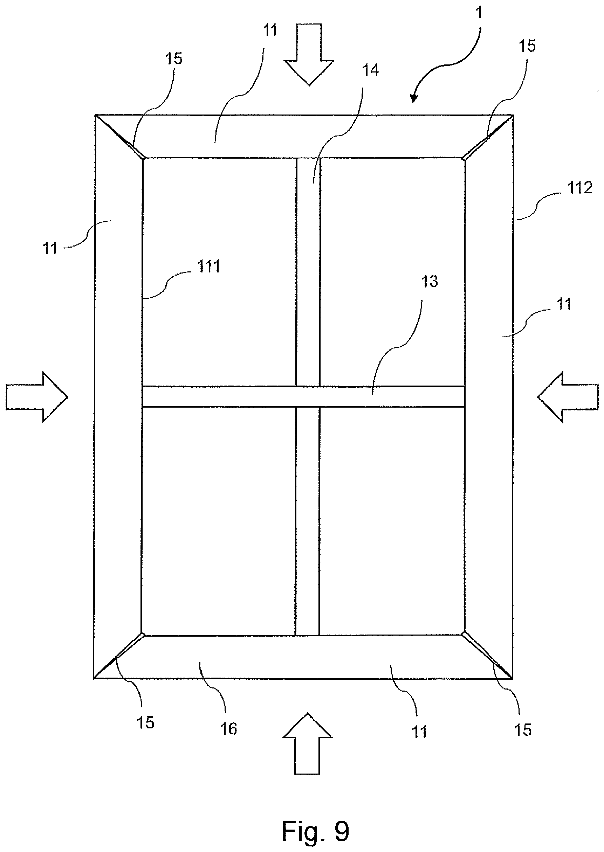

Selon l'invention, ledit cadre 1 forme un angle droit entre au moins deux profilés 11. En d'autres termes, ledit cadre 1 comprend au moins deux profilés 11 disposés à angle droit, c'est-à-dire qu'un angle de 90° est formé entre lesdits profilés 11, comme on peut le voir sur les figures 1 à 9. De manière avantageuse, ledit cadre 1 comprend quatre profilés 11 et forme un parallélépipède rectangle en ayant par exemple la forme générale d'un rectangle ou d'un carré comme l'illustrent par exemple les figures 8 et 9. Toujours selon l'invention, chacun desdits profilés 11 est délimité par une bordure intérieure 111, c'est-à-dire par exemple par une face ou une surface qui est destinée à former une partie de la bordure intérieure (ou de la face ou de la surface) intérieure 111 dudit cadre 1, une fois ce dernier obtenu par le procédé de l'invention, comme l'illustre par exemple la figure 5. Ainsi, dans le cas où ledit cadre 1 est un cadre dormant de fenêtre, ladite bordure intérieure 111 est alors la bordure ou la face destinée à être en contact avec l'ouvrant, ladite bordure intérieure 111 participant alors à l'étanchéité de l'ouverture. Alternativement, dans le cas où ledit cadre 1 est un cadre ouvrant de fenêtre, ladite bordure intérieure 111 est la bordure ou la face destinée à recevoir la vitre.

Toujours selon l'invention, chacun desdits profilés 11 est également délimité par une bordure extérieure 112 c'est-à-dire par exemple par une face ou une surface qui est destinée à former une partie de la bordure extérieure (ou de la face ou de la surface) extérieure 112 dudit cadre 1, une fois ce dernier obtenu par le procédé de l'invention, comme l'illustre par exemple la figure 5. Ainsi, dans le cas où ledit cadre 1 est un cadre dormant de fenêtre, ladite bordure extérieure 112 est la bordure ou la face destinée à être en contact avec la maçonnerie, ladite bordure extérieure 112 participant alors à la fixation du cadre. Alternativement, dans le cas où ledit cadre 1 est un cadre ouvrant de fenêtre, ladite bordure extérieure 112 est la bordure ou la face destinée à être en contact avec le dormant.

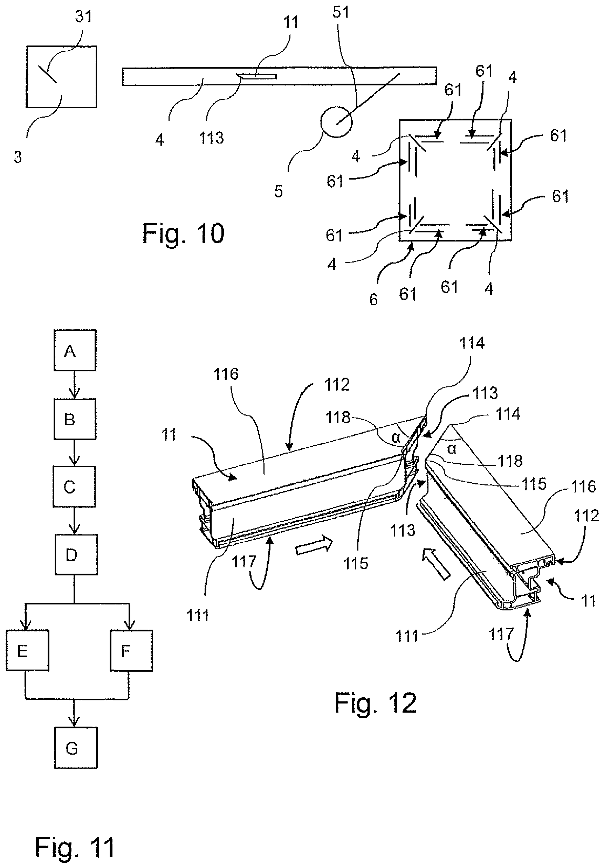

Préférentiellement, lesdites bordures intérieures 111 et extérieures 112 sont sensiblement parallèles entre elles et s'étendent longitudinalement de manière à former un profilé 11 comme on peut le voir sur les figures 1 à 9 ou sur la figure 12.

Chacun desdits profilés 11 est également délimité par au moins un parement 116, c'est-à-dire par une surface sensiblement place. Préférentiellement, ledit parement 116 est un parement intérieur 116, c'est-à-dire le parement (ou la surface) qui sera situé à l'intérieur du bâtiment.

Préférentiellement, chacun desdits profilés 11 est également délimité par un parement extérieur 117, opposé audit parement intérieur 116. Ledit parement extérieur 117 est alors le parement destiné à se situer à l'extérieur du bâtiment.

Préférentiellement, lesdits parement intérieurs 116 et extérieurs 117 sont parallèles entre eux et s'étendent longitudinalement de manière à former un profilé 11 comme on peut le voir sur les figures 1 à 9 ou sur la figure 12.

Ainsi, lesdites bordures intérieure et extérieure 111, 112 et lesdits parements intérieurs et extérieurs 116, 117 constituent les quatre parois ou faces extérieures qui délimitent chacun des profilés 11.

De manière avantageuse, chacun desdits profilés 11 est creux et présente préférentiellement une section sensiblement rectangulaire ou carrée, comme on peut le voir sur la figure 4, ou encore une section ayant sensiblement la forme d'un Z (comme on peut le voir sur la figure 12) ou d'un L, ou encore n'importes quelles autres sections proposées par les différents fabricants de profilés standards. Avantageusement, ledit profilé 11 comprend différents éléments tels que des nervures, des rainures, des bossages, des joints, etc. non représentés sur les figures mais qui sont communément utilisés dans le domaine de la menuiserie pour réaliser des fonctions telles que l'étanchéité, l'isolation, de renforcement de la rigidité, l'évacuation de l'eau, etc.

Préférentiellement chacun des profilés 11 est réalisé en matériau plastique et avantageusement en PVC. Indifféremment, chacun des profilés peut être teinté dans la masse de manière à lui donner une couleur uniforme (blanche par exemple) ou au contraire être décoré uniquement en surface, préférentiellement à l'aide d'un film de décoration, par exemple pour donner à la surface des profilés (c'est-à-dire à ses bordures intérieure et extérieure 111, 112 et à ses parements intérieurs et extérieurs 116, 117) un aspect imitant un autre matériau, et notamment du bois. Alternativement, ledit profilé peut également être recouvert, uniquement en surface d'une couleur ou d'une matière particulière visant à apporter une certaine texture (couleur texturée) au profilé.

Selon l'invention, ledit procédé comprend une étape de découpe A au cours de laquelle on découpe chacun desdits profilés 11 de biais selon un plan de découpe biaise 113 normal audit parement 116. En d'autres termes, lors de cette étape de découpe A, chaque profilé 11 est découpé en biais d'un angle de même valeur, par exemple au moyen d'une scie circulaire 31 située à un poste de découpe biaise 3, comme l'illustre la figure 10. Plus précisément, le plan formé par la lame de scie circulaire 31 est orienté de biais par rapport à la bordure intérieure 111 ou la bordure extérieure 112, c'est-à-dire que ladite lame n'est pas perpendiculaire à l'une de ces bordures 111, 112. En revanche, les dents de la lame de scie 31 sont elles perpendiculaires au parement 116, c'est-à-dire que la lame de scie 31 va s'enfoncer dans la matière du profilé 11 perpendiculairement au parement intérieur 116. On obtient alors un plan de découpe biaise 113 visible par exemple sur les figures 1, 2, 4, 6, 10 et 12 qui constitue ainsi une extrémité coupée du profilé 11.

Plus précisément, et comme on peut le voir sur les figures 1, 4,6 et 12, ledit plan de découpe biaise 113 comprend alors un coin intérieur situé à l'intersection de la bordure intérieure 111, du plan de découpe biaise 113 et du parement intérieur 116 ainsi qu'un coin extérieur 114 situé à l'intersection de la bordure extérieure 112, du plan de découpe biaise 113 et du parement intérieur 116.

Avantageusement, ladite découpe biaise est effectuée selon un angle différent de 45°, de manière à se distinguer des coupes biaises connues (dites coupes d'onglet) et généralement utilisées pour réaliser des assemblages à angle droit.

Selon l'invention, lors de ladite étape de découpe A, on découpe lesdits profilés 11 de biais selon un angle de découpe biaise α entre ladite bordure extérieure 112 et ledit plan de découpe biaise 113 qui est strictement supérieur à 45°, et préférentiellement inférieur à 55°. Ainsi, lors de ladite étape de découpe A, chaque profilé est coupé en biais d'un angle de même valeur strictement supérieur à 45°. En d'autres termes, l'angle entre ladite bordure intérieure 111 et ledit plan de découpe biaise 113 est par conséquent strictement inférieur à 135°. La figure 1 représente un premier mode de réalisation de l'invention selon lequel les profilés 11 sont découpés de biais avec un angle de découpe biaise α égal à 50°.

Selon un mode de réalisation préférentiel, on découpe lesdits profilés 11 de biais selon un angle de découpe biaise a entre ladite bordure extérieure 112 et ledit plan de découpe biaise 113 sensiblement égal à 46°. En d'autres termes, l'angle entre ladite bordure intérieure 111 et ledit plan de découpe biaise 113 est par conséquent égal à 134°.

Selon l'invention, ledit procédé comprend également une étape de forgeage G au cours de laquelle on assemble lesdits profilés 11 entre eux pour former un angle droit en mettant en contact lesdits plans de découpe biaise 113. En d'autres termes, lesdits plans de découpe biaise 113 desdits au moins deux profilés 11 sont mis en contact et pressés les uns contre les autres de manière à déformer localement plastiquement la matière et réaliser ainsi un assemblage non démontable, selon le principe du forgeage. Préférentiellement ladite étape de forgeage est précédée d'une étape de bridage ou d'installation D au cours de laquelle lesdits profilés 11 sont immobilisés au sein de matrices et / ou de moyens de guidage 61 appartenant avantageusement à une machine de soudure 6, selon un procédé connu en tant que tel, comme on peut le voir sur la figure 10, afin de conférer auxdits profilés un positionnement relatif (entre eux) à angle droit.

Plus précisément, compte tenu dudit angle de découpe biaise α strictement supérieur à 45° et l'angle droit imposé entre lesdits profilés 11, lors de ladite étape de forgeage G, on déforme au moins localement lesdits plans de découpe biaise 113 de manière à former un cordon de soudure 15 dont la taille est décroissante depuis ladite bordure intérieure 111 vers ladite bordure extérieure 112, comme on peut le voir sur les figures 3, 5, 7. En effet, de manière connue en tant que telle, on utilise des brides et / ou des matrices et / ou des moyens de guidage 61 (représentés schématiquement à la figure 10), généralement intégrés aux machines de soudage 6 de cadres, pour maintenir lesdits profilés 11 orientés selon un angle droit (c'est-à-dire un angle de 90°) entre leurs axes longitudinaux. Les profilés 11 sont alors contraints de s'assembler, lors du forgeage selon un angle droit, ce qui, compte tenu dudit angle de découpe biaise α va engendrer un débordement de matière, c'est-à-dire un cordon de soudure, non uniforme au niveau du plan de joint formé par l'assemblage desdits profilés 11. En d'autres termes, le cordon de soudure 15 fait saillie et déborde sur les parements 116 des deux profilés 11 assemblés, comme on peut le voir sur la figure 3 par exemple.

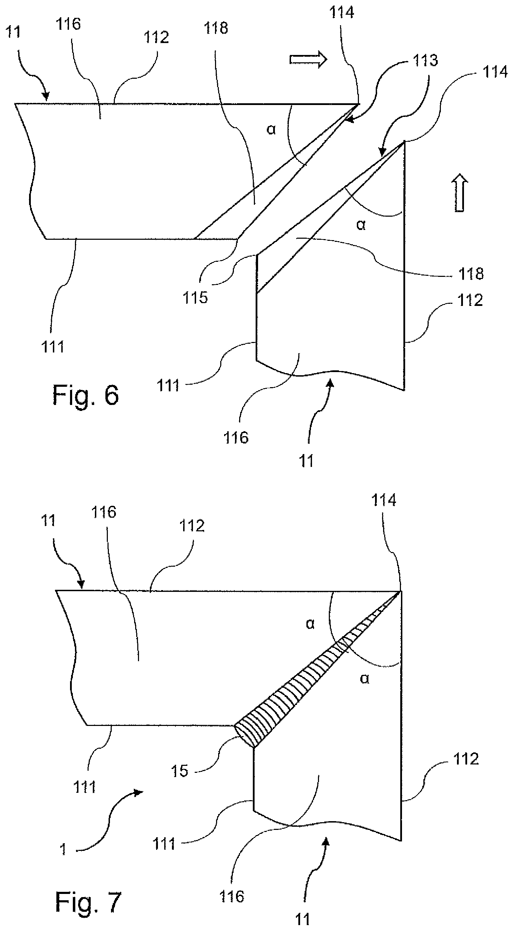

Ainsi, grâce au procédé de l'invention, le cordon de soudure 15 est beaucoup plus important sur la bordure intérieure 111 du cadre 1, comme l'illustrent par exemple les figures 5 et 7 tandis qu'il est moins important, voire inexistant, en fonction de l'angle choisi et des dimensions du profilé, sur la bordure extérieure 112 du cadre 1 ainsi obtenu. La taille du cordon de soudure 15 décroit alors longitudinalement ce qui permet de manière tout à fait remarquable de sensiblement diminuer, voire supprimer tout surplus de matière sur la bordure extérieure 112 du cadre, bordure particulièrement visible dans le cas d'un ouvrant, tout en donnant au cadre 1 ainsi constitué une résistance suffisante. En effet, compte tenu de la forme du cadre 1, les efforts sont concentrés au niveau des angles des bordures intérieures 111 des différents profilés 11 et sont au contraire très faibles au niveau des angles des bordures extérieures 112. Il n'est donc pas nécessaire d'avoir un important cordon de soudure sur la bordure 112 du cadre 1.

Ainsi, grâce au procédé de l'invention et en particulier grâce à la forme divergente du cordon de soudure 15, les opérations d'ébavurage sur la bordure extérieure 112 sont considérablement diminuées, voire même supprimées, ce qui permet de diminuer sensiblement le temps de fabrication d'un cadre, mais également la surface de l'atelier et l'investissement machine, étant donné qu'il n'est plus nécessaire de procéder à une quelconque opération d'ébavurage.

Préférentiellement, ladite étape de forgeage G est précédée d'une étape de chauffage E au cours de laquelle on chauffe lesdits plans de découpe biaise 113 par exemple au moyen d'un élément de chauffage 2 se présentant préférentiellement sous la forme d'une plaque ou d'un miroir comme on peut le voir sur la figure 1 notamment. Avantageusement, lesdits plans de découpe biaise 113 sont chauffés à une température suffisante pendant une durée suffisante pour ramollir le PVC, sans toutefois le liquéfier, comme préférentiellement à une température comprise entre 220°C et 300°C, et avantageusement à une température de 260°C.

Les figures 1 à 3 illustrent dans le détail les différentes étapes décrites précédemment. Ainsi, comme on peut le voir sur la figure 1, lors de ladite étape de chauffage E, un élément de chauffage 2 est positionné entre les plans de découpe biaise 113 de manière à chauffer et ramollir ces derniers. Puis, après un certain temps de chauffage (généralement plusieurs dizaines de secondes, avantageusement une trentaine de secondes), l'élément de chauffage 2 est retiré (par exemple de manière automatique par la machine de soudage 6) et l'opération de forgeage proprement dite peut commencer. Ainsi, comme l'illustre la figure 2, les deux profilés 11 sont rapprochés les uns des autres de manière à ce que, dans un premiers temps, les coins intérieurs 115 de chacun des plans de découpe biaise 113 viennent en contact avec un autre plan de découpe biaise 113. A ce moment, compte tenu dudit angle de découpe biaise a, les coins extérieurs 114 desdits plans de découpe biais 113 ne sont pas en contact. Puis, sous l'effet d'un effort de rapprochement entre lesdits profilés 11 et du ramollissement de la matière liée à l'étape préalable de chauffage, un cordon de soudure 15 se forme comme l'illustre la figure 3. Comme expliqué précédemment, la taille de ce dernier est décroissante depuis le coin intérieur 115 vers le coin extérieur 114. En effet, comme on peut le voir sur la figure 2, la fusion de matière entre les deux profilés 11 sera maximale au niveau des coins intérieurs 115 et minimale, voire préférentiellement nulle, au niveau des coins extérieurs 114 des profilés 11. En d'autres termes, selon un mode de réalisation particulièrement avantageux, ladite bordure extérieure 112 du cadre 1 ainsi réalisée est exempte de cordon de soudure 15.

Ainsi, grâce au procédé de l'invention, la longueur de la bordure extérieure 111 des profilés n'est pas modifiée lors de l'opération de forgeage dans la mesure où il n'y a pas (ou très peu) de débordement de matière au niveau des angles des bordures extérieures 112, c'est-à-dire au niveau des coins extérieurs 114. Dès lors, la longueur de découpe des profilés 11 correspond à la longueur des profilés 11 une fois le cadre 1 formé.

De manière alternative, il peut également être envisagé lors de ladite étape de découpe, que l'on découpe lesdits profilés 11 de biais selon un angle de découpe biaise α entre ladite bordure extérieure 112 et ledit plan de découpe biaise 113 strictement inférieur à 45°. Dès lors, de manière complémentaire à la description ci-dessus, le cordon de soudure sera alors d'une taille croissante depuis ladite bordure intérieure 111 vers ladite bordure extérieure 112. Le cordon de soudure 15 serait alors beaucoup plus important sur la bordure extérieure 112 du cadre 1 tandis qu'il serait moins important, voire inexistant, en fonction de l'angle α choisi et des dimensions des profilés 11, sur la bordure intérieure 111 du cadre 1 ainsi obtenu. Cette taille croissante du cordon de soudure 15 permettrait alors de sensiblement diminuer, voire supprimer tout surplus de matière sur la bordure intérieure 111 du cadre.

Selon un autre mode de réalisation de l'invention, la dite étape de chauffage E s'effectue par friction (soudure par friction). Dans ce cas, la déformation plastique locale des plans de découpe biaise 113 est réalisée par un échauffement lié à la friction entre eux desdits plans de découpe biaise 113. De la même manière que celle décrite précédemment, il en résulte alors un cordon de soudure 15 dont la forme est identique à celle décrite précédemment.

Alternativement à la soudure par friction, il est également parfaitement envisageable, sans sortir du cadre de l'invention d'assembler lesdits profilés 11 au moyen du procédé connu en tant que tel de soudure par ultrasons. Dans ce cas, la déformation plastique locale des plans de découpe biaise 113 est réalisée par un échauffement à l'interface des deux profilés 11 qui sont mis en vibration à haute fréquence (fréquence ultrasonore). De la même manière que celle décrite précédemment, il en résulte alors un cordon de soudure 15 dont la forme est identique à celle décrite précédemment.

Préférentiellement, ledit procédé comprend en outre une étape d'assemblage F d'au moins une traverse 13 et / ou d'un meneau 14, comme on peut le voir sur les figures 8 et 9. De manière connue en tant que telle, il est en effet fréquent d'équiper les cadres de menuiserie d'une ou plusieurs traverses 13 qui sont des éléments horizontaux reliant deux profilés 11 verticaux du cadre 1 entre eux. Il est également fréquent d'équiper les cadres de menuiserie d'un ou plusieurs meneaux 14 qui sont des éléments verticaux reliant deux profilés 11 horizontaux du cadre 1 entre eux. Préférentiellement lesdits traverses 13 et / ou meneaux 14 sont répartis de manière régulière à l'intérieur du cadre 1 et ont pour fonction d'améliorer la rigidité du cadre 1 (dans le cas de cadres de grandes dimensions) et / ou de conférer au cadre 1 une esthétique particulière.

Préférentiellement, et comme l'illustre la figure 8, ladite étape d'assemblage F d'au moins une traverse 13 et / ou d'un meneau 14 est réalisée simultanément à ladite étape de chauffage E. Ainsi, le temps de fabrication du cadre est remarquablement réduit par la réalisation en parallèle desdites étapes de chauffage E et d'assemblage F d'au moins une traverse 13 et / ou un meneau 14. Sans sortir du cadre de l'invention, lesdits au moins une traverse 13 et / ou un meneau 14 peuvent être assemblés par différents procédés, comme par exemple par vissage, par collage, par soudure, par forgeage, etc.

Avantageusement, ladite étape d'assemblage F d'au moins une traverse 13 et / ou d'un meneau 14 est réalisée sur une machine de soudure 6 équipée de plusieurs têtes de soudage (avantageusement 2 et préférentiellement 4, comme l'illustre la figure 10) et d'un robot manipulateur 5 afin de synchroniser les différentes opérations entre elles de manière automatique. Plus précisément, et comme l'illustrent les figures 8 et 9 (sur laquelle les équipements de la machine ne sont pas représentés) ainsi que la figure 10, ladite étape d'assemblage F d'au moins une traverse 13 et / ou d'un meneau 14 comprend avantageusement les étapes suivantes :
- Dans un premier temps, quatre profilés 11 sont mis en position de manière à pouvoir former un cadre 1 tout en ménageant un espace entre chacun desdits plans de découpe biais 113.
- Ensuite, quatre éléments chauffants 2 sont positionnés dans lesdits espaces entre chacun desdits plans de découpe biais 113 de manière à chauffer et ramollir ces derniers.
- En parallèle, un robot manipulateur 5 (par exemple équipé d'un bras manipulateur 51), vient positionner au moins une traverse 13 et / ou un meneau 14 à l'intérieur du cadre formé par les quatre profilés 11, ce positionnement étant possible et facilité par le fait que les différents profilés 11 ne sont pas encore en contact puisque séparés par lesdits éléments de chauffage 2 (le cadre n'a donc pas encore sa dimension définitive).
- Ensuite, comme décrit précédemment, les éléments chauffants 2 sont ôtés et la phase de forgeage commence en mettant en contact les différents plans de découpe biaise 113 des différents profilés.
- En parallèle, le robot manipulateur 5 libère ladite traverse 13 et / ou ledit meneau 14 qui viennent alors être coincés à l'intérieur du cadre 1 par le rapprochement des profilés 11 entre eux, comme on peut le voir sur la figure 9. Préférentiellement afin d'améliorer le positionnement de ladite traverse 13 et / ou ledit meneau 14 et de garantir leur maintien en position lors de la phase de forgeage, les profilés 11 qui vont accueillir ladite traverse 13 et / ou ledit meneau14 ainsi que ladite traverse 13 et / ou ledit meneau 14 sont équipés de moyens de guidage et / ou de maintien. Avantageusement, lesdits moyens de guidage et / ou de maintien comprennent deux parties complémentaires 131, 132, par exemple une partie mâle (avantageusement montée sur ladite traverse 13 et / ou ledit meneau 14) et une partie femelle (avantageusement montée sur lesdits profilés 11). De manière illustrative et non limitative, ladite pièce mâle peut par exemple être un plot, un téton, ou encore un tenon 131 et ladite partie femelle être un trou, une rainure ou encore une mortaise 132, comme on peut le voir sur la figure 8.
- Ensuite, le robot manipulateur 5 peut éventuellement, parallèlement à la phase de forgeage effectuer les opérations complémentaires d'assemblage de ladite traverse 13 et / ou dudit meneau 14, comme par exemple des opérations de vissage (à l'aide d'une vis qui viendrait par exemple bloquer l'assemblage tenon et mortaise 131, 132) ou encore une opération de soudure.

Alternativement à ladite traverse 13 et / ou ledit meneau 14, ledit procédé peut également comprendre une étape d'assemblage F d'une pièce monobloc en forme de T ou de X, selon un procédé relativement similaire à celui décrit ci-dessus et qui se déroule simultanément à la phase de chauffage telle que décrit précédemment.

Naturellement, l'enchainement des étapes du procédé d'assemblage d'au moins une traverse 13 et / ou meneau 14 ou bien les étapes elles-mêmes peuvent être adaptées en fonction du nombre de traverse 13 et / ou meneau 14 que l'on souhaite intégrer au cadre 1, ou encore en fonction du type de machine de soudage utilisée, et ce sans sortir du cadre de l'invention.

Préférentiellement, ledit procédé d'obtention d'un cadre de menuiserie 1 comprend une étape de convoyage B au cours de laquelle lesdits au moins deux profilés 11 sont transportés depuis le lieu de découpe biaise 3 vers le lieu de forgeage 6, préférentiellement au moyen d'un convoyeur 4, comme on peut le voir sur la figure 10. Préférentiellement, ledit convoyeur 4 est intégré et / ou contrôlé par la machine de soudage 6 et / ou par le robot manipulateur 5 et comprend par exemple un tapis roulant ou des rouleaux en rotation.

Avantageusement, selon un deuxième mode de réalisation, ledit procédé d'obtention d'un cadre de menuiserie 1 comprend en outre une étape d'usinage C au cours de laquelle on réalise un chanfrein 118 sur l'arrête séparant ledit parement 116 et ledit plan de découpe biaise 113, comme on peut le voir sur les figures 4, 6 ou 12. Ladite étape d'usinage C comprend avantageusement une étape d'enlèvement de matière, par exemple par ponçage ou par fraisage. Préférentiellement on réalise ledit chanfrein 118 sur au moins l'un desdits deux profilés 11 et avantageusement sur les deux profilés 11 comme on peut le voir sur les figures 4, 6 ou 12. Selon un mode de réalisation préférentiel, tous les profilés 11 comprennent, sur chacune de leurs arrêtes séparant ledit parement 116 et ledit plan de découpe biaise 113 un chanfrein 118 tel que décrit précédemment. Ainsi, selon ce deuxième mode de réalisation, le parement 116 comprend à la fois une surface plane (sa plus grande surface) et une petite surface oblique résultant du chanfrein 118. Comme l'illustrent les figures 4, 6, ou 12 les coins intérieurs 115 et extérieurs 114 sont alors situés légèrement en retrait par rapport à la surface plane dudit parement 116.

Ledit chanfrein 118 permet alors de manière remarquable de contrôler le débordement de matière lors de la phase de forgeage, comme on peut le voir sur les figures 5 et 7. En effet, le cordon de soudure 15 va pouvoir déborder à l'intérieur dudit chanfrein 118, remplir au moins localement et partiellement ce dernier et ainsi éviter tout débordement de matière sur les surfaces planes des parements 116 des profilés 11 qui sont des pièces particulièrement visibles. En d'autres termes, grâce à la présence du chanfrein 118, les parements 116 sont exempts de tout cordon de soudure 15 sur leurs surfaces plane, il n'y a donc pas de surépaisseur de matière, et il n'est donc pas nécessaire d'éliminer cette dernière par une opération d'ébavurage.

Ainsi le cordon de soudure 15 a une forme décroissante telle que mentionnée précédemment qui remplit au moins partiellement l'espace évidé formé par l'assemblage des chanfreins 118 des profilés 11 lors de la réalisation du cadre 1. Plus précisément, dans le cas non représenté par les figures où lesdits chanfreins sont réalisés sur toute la longueur de l'arrête séparant ledit parement 116 et ledit plan de découpe biaise 113, compte tenu de l'angle de découpe biaise α supérieur à 45°, l'espace évidé est totalement rempli par le cordon de soudure 15 du côté de la bordure intérieure 111 du cadre 1 réalisé, tandis qu'au contraire il est peu voire pas du tout rempli du côté de la bordure extérieure 112 du cadre 1. De manière particulièrement avantageuse et comme l'illustrent les figures 4, 6 ou 12, le chanfrein 118 n'est pas réalisé sur toute la longueur de l'arrête séparant ledit parement 116 et ledit plan de découpe biaise 113, mais est au contraire réalisé de manière décroissante sur cette dernière, afin de suivre la forme du cordon de soudure 15 décrite précédemment. Il en résulte alors une zone d'assemblage parfaitement plane, sans aucun creux ni surépaisseur, et par conséquent une continuité parfaite entre les différentes parements 116 des profilés 11 une fois assemblés, comme on peut le voir sur les figures 5 et 7.

Préférentiellement ou alternativement, un autre chanfrein est réalisé sur l'arrête séparant le parement extérieur 117 et le plan de découpe biaise 113 de manière à éviter tout débordement de matière sur le parement extérieur 117, selon un principe exactement similaire à celui décrit ci-dessus.

Comme on peut le voir sur la figure 5 ou 7, le cordon de soudure 15 déborde sur la bordure intérieure 111 du cadre 1. Ce débordement n'est pas nécessairement gênant dans la mesure où cette zone du cadre 1 est généralement peu visible, voir même masquée par le vitrage. Mais il peut éventuellement être envisagé de minimiser ce débordement, voire de le supprimer. A cette fin, ledit procédé d'obtention d'un cadre de menuiserie 1 comprend avantageusement en outre une autre étape d'usinage au cours de laquelle on réalise un autre chanfrein sur l'arrête séparant ladite bordure intérieure 111 de chacun desdits au moins deux profilés 11 et ledit plan de découpe biaise 113, ce qui permet de manière remarquable de contrôler l'extension du cordon de soudure 15 à l'intérieur du cadre 1 ainsi réalisé, dans la mesure où ledit cordon de soudure 15 bénéficie d'un espace évidé qu'il peut remplir.

Préférentiellement, ladite étape d'usinage C est réalisée entre ladite étape de convoyage B et ladite étape de chauffage E. Avantageusement, ladite étape d'usinage C est réalisée au moyen d'une broche d'usinage montée sur le robot manipulateur 5, juste avant que le profilé 11 ne quitte le convoyeur 4. Préférentiellement, ledit profilé est alors immobilisé sur le convoyeur 4 par n'importe quel moyen de bridage. Ladite étape d'usinage C est donc avantageusement réalisée en dehors de la machine de soudage, ce qui simplifie cette dernière et permet de conserver un environnement de travail propre à proximité des éléments mobiles que sont les miroirs de chauffage (absence de copeaux). Ainsi le temps total d'obtention du cadre 1 est de manière remarquable sensiblement réduit tout en améliorant l'esthétisme du cadre 1 obtenu.

La figure 11 présente l'enchainement des différentes étapes que comprend avantageusement le deuxième mode de réalisation de l'invention. Plus précisément, le procédé d'obtention d'un cadre de menuiserie selon ce mode de réalisation avantageux commence alors par ladite étape A de découpe. Une fois le profilé 11 découpé en biais selon un plan de découpe biais 113, le procédé se poursuit avec ladite étape de convoyage B afin de transporter le profilé 11 découpé depuis le lieu de découpe 3 vers le lieu de soudage ou de forgeage 4. Suite à l'étape de convoyage B, on réalise ladite étape d'usinage C. Puis, lorsque le profilé 11 est correctement usiné, c'est-à-dire pourvu du chanfrein 118, ladite étape de bridage ou d'installation D du profilé au sein de la machine de soudure et / ou de forgeage 4 commence. Par la suite, deux étapes vont être menées en parallèle, et ce afin de diminuer le temps de d'obtention du cadre : lesdites étapes de chauffage E et d'assemblage F d'au moins une traverse et / ou un meneau débutent simultanément. Enfin, une fois ces étapes terminées, l'étape de forgeage G peut avoir lieu afin d'obtenir le cadre de menuiserie 1 définitif. Bien entendu il est tout à fait possible de modifier l'ordre de ces étapes, d'en intégrer d'autres ou au contraire d'en supprimer sans sortir du cadre de l'invention. Par exemple, le premier mode de réalisation de l'invention se distingue notamment par l'absence de l'étape d'usinage C.

L'invention concerne également en tant que tel un cadre de menuiserie 1 qui comprend au moins deux profilés 11 formant un angle droit entre eux tels que décrits précédemment. Préférentiellement et tel que décrit précédemment, ledit cadre est notamment destiné à former ou à accueillir une ouverture, comme par exemple une fenêtre ou une porte, et a été réalisé selon l'un ou l'autres des modes de réalisations décrits précédemment. Préférentiellement, ledit cadre 1 comprend quatre profilés de manière à former un parallélogramme rectangle (un carré ou un rectangle).

Selon l'invention, ledit cadre 1 est délimité par une bordure intérieure 111, une bordure extérieure 112, et au moins un parement 116, ces éléments étant constitués par la juxtaposition des bordures intérieures 111, bordures extérieures 112 et parements intérieurs 116 des différents profilés 11 tels que décrits précédemment. En d'autres termes, la bordure intérieure 111 du cadre 1 est donc la juxtaposition des différentes faces ou surfaces qui viennent former l'intérieur du cadre 1, comme on peut le voir sur les figures 5 et 9. De même le parement 116 du cadre est la juxtaposition des différentes faces ou surfaces qui viennent former la face visible du cadre 1 pour un utilisateur lorsque ce dernier se trouve face au cadre 1.

Toujours selon l'invention, lesdits profilés 11 sont chacun découpés et assemblés de biais selon un plan de découpe biaise 113 normal audit parement 116, comme cela a été détaillé précédemment.

Le cadre comprend alors un cordon de soudure 15 qui s'étend à l'interface entre lesdits profilés 11 et dont la taille est décroissante depuis ladite bordure intérieure 111 vers ladite bordure extérieure 112, comme on peut le voir en détail sur la figure 3 ou la figure 7, et comme cela a été détaillé précédemment. Ainsi, ledit cordon de soudure 15 s'étend sur ledit parement 116, par exemple en faisant saillie et en débordant sur ce dernier, comme l'illustre par exemple la figure 3.

Préférentiellement, ledit cadre 1 comprend un plan de joint séparant lesdits parements 116 et dont la forme en triangle laisse entrevoir un angle de découpe biaise différent de 45°, préférentiellement strictement supérieur à 45°, et avantageusement égal à 46°, comme on peut le voir sur la figure 3. En effet, découper des profilés 11 selon un angle supérieur à 45° n'est pas complémentaire et ne conduit normalement pas à former un angle droit. La contrainte de guidage imposée au cadre 1 pour réaliser un cadre à angle droit, conduit donc à un chevauchement de matière plus important à l'intérieur du cadre 1 qu'à l'extérieur, ce qui conduit à un plan de joint de forme décroissante (par exemple un triangle en vue de dessus) depuis la bordure intérieure 111 du cadre 1 vers la bordure extérieure 112.

Préférentiellement, ladite bordure extérieure est exempte de cordon de soudure 15. En d'autres termes, les bordures extérieures 112 du cadre 1 ne sont pas soudées entre elles mais jointes bout à bout. La résistance du cadre est alors assurée par la présence du cordon de soudure 15 sur les bordures intérieures 111 du cadre ainsi que sur les parements 116, 117 ou dans les chanfrein 118 comme détaillé par la suite.

Avantageusement, au moins l'un desdits profilés 11 comprend au moins un chanfrein 118 s'étendant à partir dudit plan de découpe biaise 113, et préférentiellement s'étendant également sur ledit parement intérieur 116. En d'autres termes, ledit chanfrein 118 s'étend préférentiellement entre ledit plan de découpe biaise 113 et ledit parement intérieur 116 et est au moins partiellement rempli par ledit cordon de soudure 15, comme on peut le voir sur les figures 5 et 7.

Préférentiellement, ledit plan de découpe biaise 113 forme un angle de découpe biaise α avec ladite bordure extérieure 112 strictement supérieur à 45° et avantageusement égal à 46°.

Avantageusement, et comme l'illustre la figure 9, ledit cadre de menuiserie 1 comprend au moins une traverse 13 et / ou un meneau 14, tels que décrits précédemment.

Préférentiellement, ledit cadre 1 et ladite traverse 13 et / ou ledit meneau 14 comprennent des moyens d'assemblages complémentaires. Avantageusement, lesdits moyens d'assemblages complémentaires comprennent une partie mâle et une partie femelle, comme par exemple un tenon 131 et une mortaise 132.

## Revendications

1. Procédé d'obtention d'un cadre de menuiserie (1) formant un angle droit entre au moins deux profilés (11), chacun desdits profilés (11) étant délimité par une bordure intérieure (111), une bordure extérieure (112), et au moins un parement (116), ledit procédé comprenant les étapes suivantes :
- une étape de découpe (A) au cours de laquelle on découpe chacun desdits profilés (11) de biais selon un plan de découpe biaise (113) normal audit parement (116),
- une étape de forgeage (G) au cours de laquelle on assemble lesdits profilés (11) entre eux pour former un angle droit en mettant en contact lesdits plans de découpe biaise (113),
ledit procédé étant **caractérisé en ce que** lors de ladite étape de découpe (A), on découpe lesdits profilés (11) de biais selon un angle de découpe biaise (a) entre ladite bordure extérieure (112) et ledit plan de découpe biaise (113) qui est strictement supérieur à 45° et **en ce que** lors de ladite étape de forgeage (G), on déforme au moins localement lesdits plans de découpe biaise (113) de manière à former un cordon de soudure (15) dont la taille est décroissante depuis ladite bordure intérieure (111) vers ladite bordure extérieure (112).

2. Procédé d'obtention d'un cadre de menuiserie (1) selon la revendication précédente **caractérisé en ce que** ladite étape de forgeage (G) est précédée d'une étape de chauffage (E) au cours de laquelle on chauffe lesdits plans de découpe biaise (113), préférentiellement à une température comprise entre 220°C et 300°C.

3. Procédé d'obtention d'un cadre de menuiserie (1) selon l'une des revendications précédentes **caractérisé en ce qu'**il comprend en outre une étape d'assemblage (F) d'au moins une traverse (13) et / ou d'un meneau (14), ladite étape d'assemblage (F) d'au moins une traverse (13) et / ou d'un meneau (14) étant de préférence réalisée simultanément à ladite étape de chauffage (E).

4. Procédé d'obtention d'un cadre de menuiserie (1) selon l'une des revendications précédentes **caractérisé en ce qu'**il comprend une étape de convoyage (B) au cours de laquelle lesdits au moins deux profilés (11) sont transportés depuis le lieu de découpe biaise (3) vers le lieu de forgeage (6).

5. Procédé d'obtention d'un cadre de menuiserie (1) selon l'une des revendications précédentes **caractérisé en ce qu'**il comprend en outre une étape d'usinage (C) au cours de laquelle on réalise un chanfrein (118) sur l'arête séparant ledit parement (116) et ledit plan de découpe biaise (113).

6. Procédé d'obtention d'un cadre de menuiserie (1) selon les revendications 2, 4 et 5 **caractérisé en ce que** ladite étape d'usinage (C) est réalisée entre ladite étape de convoyage (B) et ladite étape de chauffage (E).

7. Procédé d'obtention d'un cadre de menuiserie (1) selon l'une des revendications précédentes **caractérisé en ce que** lors de ladite étape de découpe (A), on découpe lesdits profilés (11) de biais selon un angle de découpe biaise (α) entre ladite bordure extérieure (112) et ledit plan de découpe biaise (113) sensiblement égal à 46°.

8. Cadre de menuiserie (1) qui comprend au moins deux profilés (11) formant un angle droit entre eux, ledit cadre (1) étant délimité par une bordure intérieure (111), une bordure extérieure (112), et au moins un parement (116), lesdits profilés (11) étant chacun découpés et assemblés de biais selon un plan de découpe biaise (113) normal audit parement (116), **caractérisé en ce qu'**il comprend un cordon de soudure (15) qui s'étend à l'interface entre lesdits profilés (11) et dont la taille est décroissante depuis ladite bordure intérieure (111) vers ladite bordure extérieure (112).

9. Cadre de menuiserie (1) selon la revendication précédente **caractérisé en ce que** ladite bordure extérieure (112) du cadre (1) est exempte de cordon de soudure (15).

10. Cadre de menuiserie (1) selon l'une des revendications 8 ou 9 **caractérisé en ce qu'**au moins l'un desdits profilés (11) comprend au moins un chanfrein (118) s'étendant à partir dudit plan de découpe biaise (113).

11. Cadre de menuiserie (1) selon la revendication précédente **caractérisé en ce que** ledit chanfrein (118) s'étend sur ledit parement intérieur (116).

12. Cadre de menuiserie (1) selon l'une quelconque des revendications 8 à 11 **caractérisé en ce que** ledit plan de découpe biaise (113) forme un angle de découpe biaise (α) avec ladite bordure extérieure (112) strictement supérieur à 45°.

13. Cadre de menuiserie (1) selon l'une quelconque des revendications 8 à 12 **caractérisé en ce que** ledit plan de découpe biaise (113) forme un angle de découpe biaise (a) avec ladite bordure extérieure (112) égale à 46°.

14. Cadre de menuiserie (1) selon l'une quelconque des revendications 8 à 13 **caractérisé en ce qu'**il comprend au moins une traverse (13) et / ou un meneau (14).

15. Cadre de menuiserie (1) selon la revendication précédente **caractérisé en ce que** ledit cadre (1) et ladite traverse (13) et / ou ledit meneau (14) comprennent des moyens d'assemblages complémentaires, lesdits moyens d'assemblages complémentaires comprenant de préférence une partie mâle et une partie femelle, comme par exemple un tenon (131) et une mortaise (132).

## Patentansprüche

1. Verfahren zum Erlangen eines geschreinerten Rahmens (1), der einen rechten Winkel zwischen mindestens zwei Profilen (11) bildet, wobei jedes der Profile (11) durch eine Innenkante (111), eine Außenkante (112) und mindestens eine Verblendung (116) begrenzt ist, wobei das Verfahren die folgenden Schritte umfasst:
- einen Schneideschritt (A), bei dem jedes der Profile (11) schräg gemäß einer schrägen Schnittebene (113) senkrecht zu der Verblendung (116) geschnitten wird,
- einen Schmiedeschritt (G), bei dem die Profile (11) untereinander zusammengesetzt werden, um einen rechten Winkel zu bilden, indem die schrägen Schnittebenen (113) in Kontakt gebracht werden,
wobei das Verfahren **dadurch gekennzeichnet ist, dass** während des Schneideschritts (A) die Profile (11) schräg gemäß einem schrägen Schnittwinkel (α) zwischen der Außenkante (112) und der schrägen Schnittebene (113) geschnitten werden, der strikt größer als 45° ist, und dass während des Schmiedeschritts (G) die schrägen Schnittebenen (113) zumindest lokal verformt werden, um eine Schweißnaht (15) zu bilden, deren Größe von der Innenkante (111) zu der Außenkante (112) abnehmend ist.

2. Verfahren zum Erlangen eines geschreinerten Rahmens (1) nach dem vorhergehenden Anspruch, **dadurch gekennzeichnet, dass** dem Schmiedeschritt (G) ein Erhitzungsschritt (E) vorausgeht, bei dem die schrägen Schnittebenen (113) erhitzt werden, vorzugsweise auf eine Temperatur zwischen 220 °C und 300 °C.

3. Verfahren zum Erlangen eines geschreinerten Rahmens (1) nach einem der vorhergehenden Ansprüche, **dadurch gekennzeichnet, dass** es unter anderem einen Zusammensetzungsschritt (F) mindestens einer Traverse (13) und/oder einer Sprosse (14) umfasst, wobei der Zusammensetzungsschritt (F) mindestens einer Traverse (13) und/oder einer Sprosse (14) vorzugsweise gleichzeitig mit dem Erhitzungsschritt (E) durchgeführt wird.

4. Verfahren zum Erlangen eines geschreinerten Rahmens (1) nach einem der vorhergehenden Ansprüche, **dadurch gekennzeichnet, dass** es einen Förderschritt (B) umfasst, bei dem die mindestens zwei Profile (11) von der Stelle des schrägen Schnitts (3) zu der Schmiedestelle (6) befördert werden.

5. Verfahren zum Erlangen eines geschreinerten Rahmens (1) nach einem der vorhergehenden Ansprüche, **dadurch gekennzeichnet, dass** es ferner einen Bearbeitungsschritt (C) umfasst, bei dem eine Fase (118) an dem Kante ausgeführt wird, die die Verblendung (116) und die schräge Schnittebene (113) trennt.

6. Verfahren zum Erlangen eines geschreinerten Rahmens (1) nach den Ansprüchen 2, 4 und 5, **dadurch gekennzeichnet, dass** der Bearbeitungsschritt (C) zwischen dem Förderschritt (B) und dem Erhitzungsschritt (E) ausgeführt wird.

7. Verfahren zum Erlangen eines geschreinerten Rahmens (1) nach einem der vorhergehenden Ansprüche, **dadurch gekennzeichnet, dass** während des Schneideschritts (A) die Profile (11) schräg gemäß einem schrägen Schnittwinkel (α) zwischen der Außenkante (112) und der schrägen Schnittebene (113) im Wesentlichen gleich 46° geschnitten werden.

8. Geschreinerter Rahmen (1), der mindestens zwei Profile (11) umfasst, die einen rechten Winkel untereinander bilden, wobei der Rahmen (1) durch eine Innenkante (111), eine Außenkante (112) und mindestens eine Verblendung (116) begrenzt ist, wobei die Profile (11) jeweils schräg gemäß einer schrägen Schnittebene (113) senkrecht zu der Verblendung (116) geschnitten und zusammengesetzt werden, **dadurch gekennzeichnet, dass** er eine Schweißnaht (15) umfasst, die sich an der Schnittstelle zwischen den Profilen (11) erstreckt und deren Größe von der Innenkante (111) zu der Außenkante (112) abnehmend ist.

9. Geschreinerter Rahmen (1) nach dem vorstehenden Anspruch, **dadurch gekennzeichnet, dass** die Außenkante (112) des Rahmens (1) frei von Schweißnaht (15) ist.

10. Geschreinerter Rahmen (1) nach einem der Ansprüche 8 oder 9, **dadurch gekennzeichnet, dass** mindestens eines der Profile (11) mindestens eine Fase (118) aufweist, die sich von der schrägen Schnittebene (113) erstreckt.

11. Geschreinerter Rahmen (1) nach dem vorstehenden Anspruch, **dadurch gekennzeichnet, dass** sich die Fase (118) auf die Innenverblendung (116) erstreckt.

12. Geschreinerter Rahmen (1) nach einem der Ansprüche 8 bis 11, **dadurch gekennzeichnet, dass** die schräge Schnittebene (113) einen schrägen Schnittwinkel (α) mit der Außenkante (112) strikt größer als 45° bildet.

13. Geschreinerter Rahmen (1) nach einem der Ansprüche 8 bis 12, **dadurch gekennzeichnet, dass** die schräge Schnittebene (113) einen schrägen Schnittwinkel (α) mit der Außenkante (112) gleich 46° bildet.

14. Geschreinerter Rahmen (1) nach einem der Ansprüche 8 bis 13, **dadurch gekennzeichnet, dass** er mindestens eine Traverse (13) und/oder eine Sprosse (14) umfasst.

15. Geschreinerter Rahmen (1) nach dem vorherigen Anspruch, **dadurch gekennzeichnet, dass** der Rahmen (1) und die Traverse (13) und/oder die Sprosse (14) komplementäre Montagemittel umfassen, wobei die komplementären Montagemittel vorzugsweise ein Außenteil und ein Innenteil, wie beispielsweise einen Zapfen (131) und ein Zapfenloch (132), umfassen.

## Claims

1. Method for obtaining a door or window frame (1) forming a right angle between at least two profiled members (11), each of said profiled members (11) being delimited by an inner edge (111), an outer edge (112) and at least one facing (116), said method comprising the following steps:
- a cutting step (A) during which each of said profiled members (11) are cut aslant along a slanted cutting plane (113) normal to said facing (116),
- a forging step (G) during which said profiled members (11) are assembled together in order to form a right angle, putting said slanted cutting planes (113) in contact,
said method being **characterised in that**, during said cutting step (A), said profiled members (11) are cut aslant at a slanted cutting angle (α) between said outer edge (112) and said slanted cutting plane (113) that is strictly greater than 45°, and **in that**, during said forging step (G), said slanted cutting planes (113) are deformed at least locally so as to form a welding bead (15) the size of which decreases from said inner edge (111) towards said outer edge (112).

2. Method for obtaining a door or window frame (1) according to the preceding claim, **characterised in that** said forging step (G) is preceded by a heating step (E) during which said slanted cutting planes (113) are heated, preferably to a temperature of between 220°C and 300°C.

3. Method for obtaining a door or window frame (1) according to either of the preceding claims, **characterised in that** it further comprises a step (F) of assembling at least one crossmember (13) and/or a mullion (14), said step (F) of assembling at least one crossmember (13) and/or a mullion (14) preferably being carried out simultaneously with said heating step (E).

4. Method for obtaining a door or window frame (1) according to any of the preceding claims, **characterised in that** it comprises a conveying step (B) during which said at least two profiled members (11) are transported from the slanted-cutting place (3) to the forging place (6).

5. Method for obtaining a door or window frame (1) according to any of the preceding claims, **characterised in that** it further comprises a machining step (C) during which a bevel (118) is produced on the ridge separating said facing (116) and said slanted cutting plane (113).

6. Method for obtaining a door or window frame (1) according to claims 2, 4 and 5, **characterised in that** said machining step (C) is carried out between said conveying step (B) and said heating step (E).

7. Method for obtaining a door or window frame (1) according to any of the preceding claims, **characterised in that**, during said cutting step (A), said profiled members (11) are cut aslant at a slanted cutting angle (α) between said outer edge (112) and said slanted cutting plane (113) that is substantially equal to 46°.

8. Door or window frame (1) that comprises at least two profiled members (11) forming a right angle between them, said frame (1) being delimited by an inner edge (111), an outer edge (112) and at least one facing (116), said profiled members (11) each being cut and assembled aslant along a slanted cutting plane (113) normal to said facing (116), **characterised in that** it comprises a welding bead (15) that extends at the interface between said profiled members (11) and the size of which decreases from said inner edge (111) towards said outer edge (112).

9. Door or window frame (1) according to the preceding claim, **characterised in that** said outer edge (112) of the frame (1) is free from any welding bead (15).

10. Door or window frame (1) according to either claim 8 or claim 9, **characterised in that** at least one of said profiled members (11) comprises at least one bevel (118) extending from said slanted cutting plane (113).

11. Door or window frame (1) according to the preceding claim, **characterised in that** said bevel (118) extends over said inner facing (116).

12. Door or window frame (1) according to any of claims 8 to 11, **characterised in that** said slanted cutting plane (113) forms a slanted cutting angle (α) with said outer edge (112) that is strictly greater than 45°.

13. Door or window frame (1) according to any of claims 8 to 12, **characterised in that** said slanted cutting plane (113) forms a slanted cutting angle (α) with said outer edge (112) that is equal to 46°.

14. Door or window frame (1) according to any of claims 8 to 13, **characterised in that** it comprises at least one crossmember (13) and/or a mullion (14).

15. Door or window frame (1) according to the preceding claim, **characterised in that** said frame (1) and said crossmember (13) and/or said mullion (14) comprise complementary assembly means, said complementary assembly means preferably comprising a male part and a female part, such as for example a tenon (131) and a mortice (132).
